# EUROPEAN PATENT APPLICATION

(11) **EP 2 774 693 A1**
(43) Date of publication of application: **10.09.2014**
(21) Application number: 14150457.1
(22) Date of filing: 08.01.2014
(51) Int. Cl.: B07C 5/342

(54) **Process for removing contaminants from polymeric powders**

(30) Priority: 05.03.2013 US 201313785474
(71) Applicant: Howmedica Osteonics Corp., Mahwah, NJ 07430 (US)
(72) Inventor: Prabhu, Balaji, Upper Saddle River, NJ New Jersey 07458 (US); Mascles, Jerome, Irvington, NY New York 10533 (US)
(74) Representative: Maiwald Patentanwalts GmbH

(57) **Abstract**

A method for detecting and removing foreign particles in polymeric resin powder comprising drying the resin powder; removing static energy from the resin powder; producing a layer of resin powder 0.2 to 0.8mm in height in a feeding tray which feeds a conveyor; conveying the layer of resin powder with a transparent conveyor belt at a speed of between 12.2 and 36.64 meters/minute into a foreign particle detection zone; illuminating the polymeric resin powder in the detection zone from above and below with a light; continuously imaging the resin powder from above with a high speed digital CCD camera; continuously analyzing the images with a control device to detect particles having nonwhite colors; and actuating a suction system with the controller to suction off any detected particles to produce a polymeric resin powder having a reduced number of foreign particles.

## Description

### BACKGROUND OF THE INVENTION

Ultrahigh molecular weight polyethylene (UHMWPE) medical grade plastic material is used in the manufacture of orthopedic bearing surfaces such as for the tibia, patella, glenoid, and acetabular shells. UHMWPE has superior wear resistant properties. The polymer raw material is in the form of a powder and is usually compression molded into bar or rod stock and implant bearing elements are machined from the bar stock to final end product by the implant manufacturer. Alternatively, the implant bearing components can be directly compression molded from the powdered material.

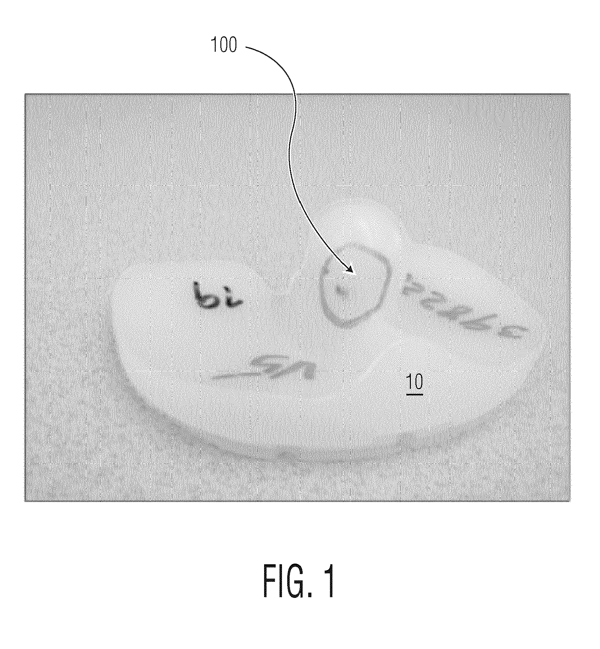

For superior bearing surface applications it is essential that the bearing surface is free of contaminations and imperfections. The final machined bearing component parts are subjected to visual inspection for embedded foreign particles (contaminations/inclusions) as shown in Fig. 1 and if detected in the final part the entire machined part is rejected as scrap. This results in costly scrap and additional manufacturing inspection steps.

The root cause of these contaminations originate from the raw polymer powder.

On performing the industry recommended inspection protocol ASTMF 648 (which accepts up to three contaminations per 300 grams of powder) higher levels (> 3 contaminations/300g) were often found in currently supplied powder.

A detection system for Quartz powder is disclosed in U.S. Patent No. 8,164,750 the disclosure of which is incorporated herein by reference.

### BRIEF SUMMARY OF THE INVENTION

At present no technology is available for detecting, sorting and removing foreign particles from UHMWPE powder since medical device manufacturers procure only the pressed bar stock from a small number of compression molding vendors for medical devices. Due to the inherent difficulty in inspecting thick bar or rod stock procured from these vendors for embedded foreign particles, medical device manufacturers rely on final visual inspection of a completely machined or molded part to identify and eliminate parts with foreign particles. This results in a high cost in parts rejected as scrap and also additional manufacturing process visual inspection steps.

The present invention deals with a process that has been optimized for detecting, sorting and removing these foreign particles from medical grade UHMWPE powder. The present invention can be broadly used for inspecting, detecting, sorting and eliminating foreign particles for all medical powders including but not limited to UHMWPE, hydroxyapatite (HA), Polyetherether Ketone (PEEK), and bioabsorbable Poly lactic acid polymers (PLLA) amongst others.

The present invention involves detecting foreign particles in medical grade powder with a specially designed detection apparatus using high speed digital CCD cameras that detect foreign particles based on color, size and density with specific detection algorithms and uses a vacuum suction or mechanical sorting system to remove the detected foreign particles. This results in clean contamination free medical grade powder because of the high detection accuracy, high capacity throughput and maximum operating efficiency using the process of the present invention. The present invention optimizes operating ranges by controlling critical operating variables based on the unique attributes and properties of both the foreign particles and the starting UHMWPE raw material.

The UHMWPE powder used in medical devices has a particle distribution of 1-500µm, a high static nature, a viscosity of 2000-3200mL/g and a density between 0.8-1.5g/cm3.

It has been found that the foreign particles have a particle size distribution of > 40µm and the majority foreign particles have a size range between 100-350µm. The foreign particles also have a high static nature. The foreign particles include but are not limited to oxidized-burnt UHMWPE particles, other complex polymer family particles, silica family particles, carbon family particles, fibers, hair, metal with predominant nonwhite colors with varying color intensities such as but not limited to amber, brown, yellow, grey and black. Furthermore, the foreign particles have a density heavier than raw UHMWPE medical grade powder.

Operating the contamination removal equipment of the present invention at or within the ranges shown in Table 1 below is key to high accuracy detection and maximum removal output of foreign particles in medical grade powders. Lack of success with medical grade powder inspection and sorting stems from the inability to convey sufficient material to maximize the output (capacity per hr) and speed of the inspection-detection and sorting operation.

This invention relates to optimizing the operating parameters of a digital camera inspection system of material on a conveyor belt to reach maximum output efficiency (capacity of 45-50kg/hr) with high detection accuracy (foreign particles as small as 40µm).

A faster belt speed will result in a lesser resident time for digital CCD camera to detect foreign particles while a lower belt speed allows a longer detection time but will result in decreasing output-capacity/hr. This invention has been optimized for an efficient detection process where the belt speed is between 12.21 to 36.64meters (m)/min with an ideal setting of 36.64m/min.

A feeder tray is provided that is fed by a hopper wherein the feeder tray has an input shutter right after the hopper with a shutter height set to ensure the desired controlling of the amount of powder entering the feeder tray from the hopper. Too small a shutter opening will result in a decreased powder flow resulting in decreasing output-capacity/hour while too large an opening will result in thicker multiple layers of powder which can essentially mask the foreign particles from detection. Thus this invention has been optimized for the most efficient opening range for the input shutter height which is between 0.8 to 3.2mm with an ideal setting of 2.8mm.

The feeder tray has a gate or dam which controls the powder height and controls the amount of powder falling into a moving conveyor belt. Too small a gate or dam height results in a lower powder flow which results in decreasing output-capacity/hour and isolated empty spots which can cause false positives (shadows) while too much height will result in thicker multiple layers of powder which can mask the foreign particles from detection by the digital video cameras and also create false positives (shadow effects). Thus this invention has optimized for efficiency with minimal to no shadows, height range for the dam height is between 0.2 to 0.8mm with an ideal setting of 0.6mm.

The feeder tray may vibrate, which vibration ensures the powder particles are in constant motion which prevents buildup of powder particles within the tray. A small vibration frequency height will result in less powder flow resulting in decreasing output-capacity/hour while too much vibration frequency can result in damage to the equipment as well as the possibility of breaking the powder particles which can cause a shift in powder particle size distribution. Thus this invention has optimized for efficiency by use of a vibration frequency range of the feeder tray between 20-30 (Hz) with an ideal setting of 25 Hz.

The feeder tray may also be angled downwardly toward the conveyor belt. The angle of the tray in combination with vibration ensures the powder particles are in constant motion and are moved toward the belt by nature of the inclination angle. A too small or flat angle will result in less powder flow resulting in decreasing output-capacity/hour while too large an angle will result in accumulation or clumping of powder particles and a possible accumulation at the feeder gate or dam area. Thus this invention has optimized for efficiency by using an angle for the oscillating tray of between 10-30 degrees with an ideal setting 15 degrees. It is important to note that this measurement can also be represented as the height of the oscillating tray with reference to a flat surface.

The vacuum pressure of the contamination particle suction unit was optimized at between 5-15 kPa with an ideal setting of 7 kPa which results in higher yield and ensures minimal raw material is removed as part of the suction process during foreign particle removal.

**Table 1**

| **Process Parameters** | **Equip Range** | **Ideal Working Range** | **Preferred** |
|---|---|---|---|
| Belt speed (m/min) | 12.21 to 36.64 | 12.21 to 36.64 | 36.64 |
| Feeder tray: Gate Height (mm) | 0.2 to 5.0mm | 0.8 to 3.2 | 2.8 |
| Feeder tray: Shutter Height (mm) | 0.2 to 5.0mm | 0.2 to 0.8 | 0.6 |
| Feeder vibration | 0-50 (Hz) | 20 to 30 | 25 |
| Angle (deg) or Height (mm) of Feeder tray | 0° to 60° | 10° to 30° | 15° |
| Vacuum pressure for cyclone suction (kPa) | 1-50 kPa | 5 to 15 | 7.00 |

Part of the present invention also relates to customizing the inspection equipment with a Pre and/or Post customized processes. For example a filtering setup/process uses a vibrating sieve mesh or conventional sieve mesh to narrow down medical grade powder, such as PE powder, to the required particle size. This customized filtering will ensure a defined particle size, e.g., less than 297µm or as defined for medical grade polymer materials, e.g., average particle size of 120-140µm which will yield optimal mechanical properties of the final material and also enhance the molding of the raw material into bar stock. Standard mesh sizes may be used to do this.
- Mesh size used to filter particles and particulate matter > 500µm = Size 35 mesh
- Mesh size used to filter particles and particulate matter > 297µm = Sizes 40, 45 and 50 mesh
- Filtering using above mentioned mesh sizes in combination or as standalone sieving.

The present invention also relates to adding various equipment to the process either before or after the main process steps discussed above. For example, a drying setup/process such as powder dryer or heat blower or heating coils can be added which will dry the incoming powder fed to the hopper at a drying temperature range of 40-75°C creating a drying zone for the free falling powder. This drying zone will ensure agglomerated medical grade powder can be broken down to free flowing individual powder particles and can ensure easy contaminant detection and avoid any shadowing caused by agglomerates of powder particles. This drying zone will also ensure that none of the high static medical grade powders, such as UHMWPE, does not stick to each other ensuring better detection accuracy and eliminating any clumping of powder which can cause deterioration of mechanical properties of a final product. This drying zone will also ensure the medical grade powder is free of retained moisture which can cause the powder to stick to the inspection equipment belt as well as cause a deterioration in final product properties.

The present invention also relates to adding before the hopper, an ionizer which will ionize the incoming UHMWPE powder. This ionizing zone ensures the high static medical grade powder such as PE does not stick together ensuring better detection accuracy.

The present invention also relates to adding an automatic bagging system after the inspection zone fitted with anti-static bags made of, for example, polyethylene. Current medical grade powders are packed into bags which shred into fibers on opening. The special anti-static bags will ensure no such fibers or shreds are released on opening these bags. These bags are anti-static and do not cause the powder particles to stick to the bags and also prevent moisture from entering the powder particles during storage and handling. The automatic bagging system will ensure the sieved-dried-ionized-contamination free powder is automatically bagged.

Currently no such multi-step sieved-dried-ionized-inspected-sorted-bagged system exists for medical grade powder material.

Another aspect of this invention relates to a unique method to calibrate the equipment prior to starting the inspection process for the medical grade powder. For this calibration process a mixture of custom made foreign particles with known quantity, size, color, polymer composition, and density are mixed with known UHMWPE powder of a known quantity, size, color, composition and density. By running the equipment with these known foreign particles and recording output of the inspection system described above and verifying with the known values, the equipment will be calibrated on an ongoing basis. The colored foreign particles chosen for mixture have similar densities as the raw material ≈ 1g/cc, belong to same UHMWPE species, are highly static as PE powder and have the same foreign particle size ranges commonly observed in normal raw UHMWPE powder. This unique mixture of PE foreign particle + UHMWPE raw powder will be used every time prior to start of the inspection process and the output will be verified to ensure the equipment is calibrated for the medical grade powder. An important result of the calibration system of the present invention is that there are no false positives or shadows that can be erroneously detected by equipment. This calibration mixture/method will ensure good raw material is not detected as foreign particles which can cause a decrease in production capacity and avoids the result of not detecting foreign particles.

### BRIEF DESCRIPTION OF THE DRAWINGS

Fig. 1 is a photograph of a finished tibial bearing component made of polyethylene which was scraped due to visible particulate matter;
Fig. 2 is a schematic view of the apparatus of the present invention used for removing contaminants from ultrahigh molecule weight polyethylene powder;
Fig. 3 are two photographs of additional scrap tibial components having contaminants visible therein;
Fig. 3A is a photographic top view of a tibial bearing component made from polyethylene powder processed by the apparatus of the present invention;
Figs. 4, 4A and 4B show before (Figs. 4A and 4B) and after (Fig. 4) photographs of the polyethylene powder processed by the apparatus and method of the present invention; and
Fig. 5 is a photograph of the resin powder including predetermined color contaminants utilized to calibrate the apparatus of the present invention.

### DETAILED DESCRIPTION

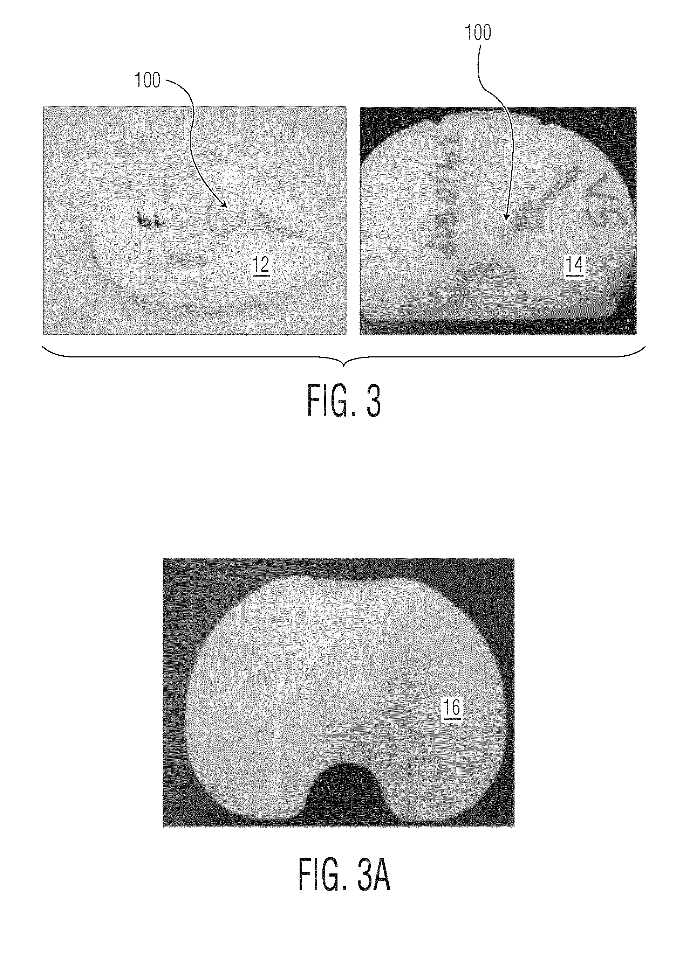

Referring to Figs. 1, 3 and 3A, there is shown a series of completed tibial bearing components 10, 12, 14 and 16 manufactured from rod or bar stock made of ultrahigh molecular weight polyethylene (UHMWPE), which have failed a standard inspection test. As can be seen in components 10, 12 and 14, large darkish color contaminants 100 are present in the completely manufactured tibial implants. Because of these contaminants, the manufactured parts had to be scrapped with the obvious entire loss of the cost of the material and manufacturing process. In some cases, manufactured UHMWPE bearings for tibial, patella, glenoid, and acetabular implants had a scrap rate of 5-10% resulting in the loss of thousands of dollars.

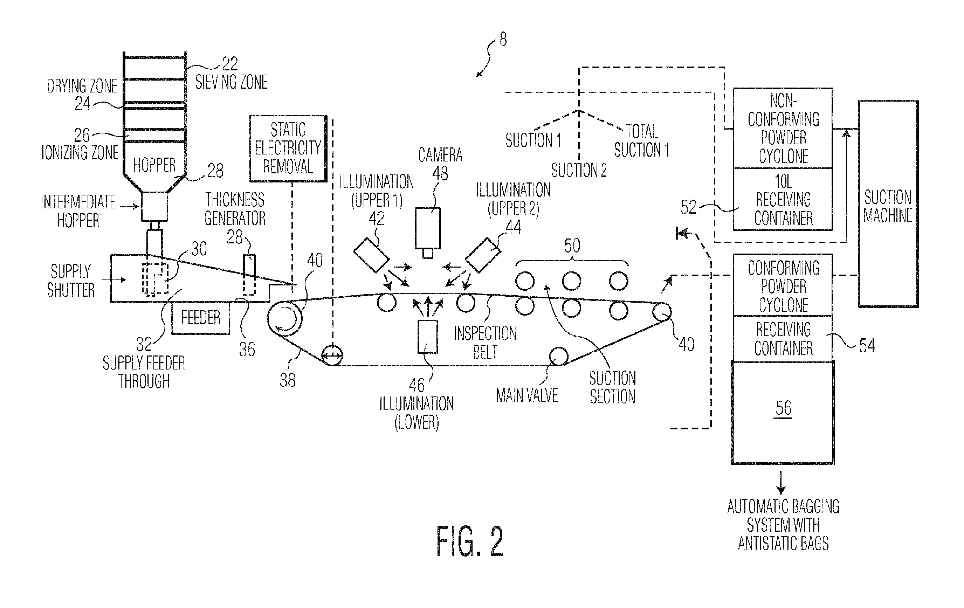

Referring to Fig. 2, there is shown schematically an apparatus 8 for performing a process for removing contaminants 100 such as that shown in Figs. 1 and 3. In the process and apparatus described in Fig. 2 raw (untreated) polyethylene powder having a particular size between 1µm and 500µm is obtained. The raw powder is then sieved in step 22 to remove particles above approximately 300µm and produce a powder preferably with an average particle size of between 120 and 140µm. After sieving 12, the particles are passed through a dryer 24 which blows air through the particles, the air at a temperature of between 30° and 75°C. After drying, the sieved particles may have an electrical charge which is neutralized by an ionizer 26. After going through the sieve zone 22, drying zone 24, and ionizing zone 26, the powder is fed into a hopper 28. Hopper 28 has an output controlled by a supply shutter or gate 30, which is essentially a variable sized opening allowing a predetermined amount of powder to drop through. There can be a feedback system which controls the opening of the shutter 30 to thereby vary the amount of powder output from hopper 28. Hopper 28 feeds a feeding tray 32 which may vibrate at between 10 and 20 Hertz to convey the powder particles. A powder layer thickness generator 34 is provided, which may be in the form of a gate or dam with a mechanism which can adjust the powder layer height preferably between .8 and 3.2mm. Typically this is accomplished by a metal bar extending parallel to the bottom 36 of feeder tray 32. This adjustment can be accomplished by using a screw system, which can either be adjusted manually or via a control feedback system.

Feeder tray 32 feeds a conveyer belt 38 which is mounted on typical pulleys such as at 40. To ensure proper feeding from the feeding tray 32, bottom 36 may be angled downwardly toward the conveyor belt 38 at an angle between 10° and 30° and preferably 15°. It should be noted that the ionizing zone 26 discussed above could be located intermediate the output of feeding tray 36 and conveyor 38, although this is not preferred. As shown in Fig. 2, conveyor belt 38 moves the powder clockwise into a scanning zone 39 which includes illumination lights 42 and 44 located above the conveyor as well as an illumination light 46 located below the conveyor and shining upwardly through the conveyor belt. To allow for the light from the illuminator 46 to pass through conveyor belt 38 is made of a translucent polyurethane. In total, lights 42, 44, and 46 provide sufficient illumination for a digital camera 48 to scan the powder at high speeds. Digital camera 48 communicates with a microprocessor based control system which can identify color particles which contrast with the almost white color of the ultrahigh molecular weight polyethylene powder background. To do this, camera 48 may produce a 1000 grid output and the controller can determine which grid contains the darker particles. It has been found that an ideal belt speed for this particle identification process is about 37 meters per minute, however, any speed between 12 meters and 37 meters per minute can be used. The camera and controller may be obtained from any commercial vendor and may be that used in the process described in U.S. Patent No. 8,164,750. The lighting system of 8,164,750 may also be used.

Upon exiting scanning zone 39, the belt enters a suction zone or section 50 which can be energized in a grid area corresponding to the location of the detected contamination particle. The suction section 50 uses vacuum elements spaced just above the conveyor belt 38 and can produce a vacuum pressure between 5 and 15 kPa. The selected grid suction removes the detected particles and transports them to a waste receiving container 42 downstream of suction zone 50. Once the decontaminated powder leaves the suction zone and reaches zone 50, it is placed in a receiving container 54. An automatic bagging system 56 is utilized to place the decontaminant powder in antistatic polyethylene bags which are commercially available. The powder is then shipped to a consolidator which molds the decontaminated powder into sod stock and bar stock. This consolidated stock is then transferred to the orthopedic implant manufacturer for the fabrication of the various orthopedic bearing components.

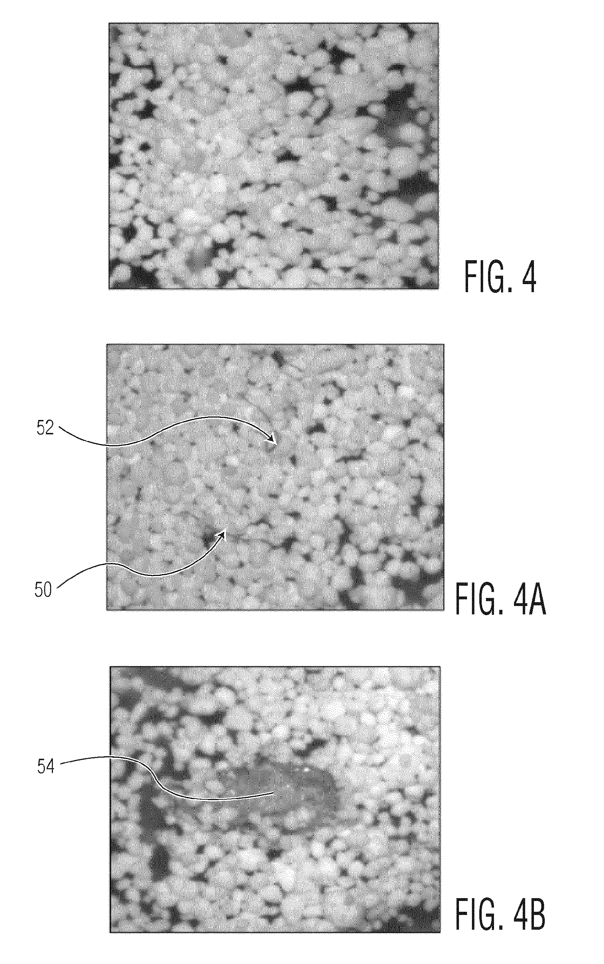

Referring to Figs. 4 and 4B, there are shown before and after photographs of the polyethylene powder. In Fig. 4A dark fibers are shown in the powder prior to cleaning with the process described herein. Fig. 4B shows a large dark colored particle prior to removal. The photograph of Fig. 4 shows the various contaminants having been removed.

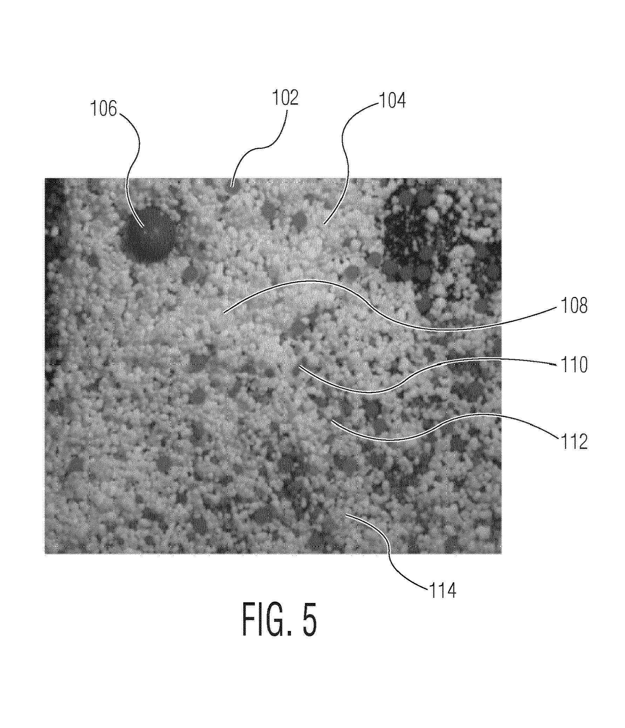

Referring to Fig. 5, there is shown a particle mixture used to calibrate the contamination apparatus 8. As shown in Fig. 5, there is a test powder with multiple known contaminants i.e., colored particles, mixed with the sieved polyethylene powder 114 (approximately 150µm average size). The contaminants are red, yellow, blue, pink, gray, and orange. The red contaminants 102 are between 250 and 300µm in size, the yellow contaminants 104 are between 125 and 150µm in size, the blue contaminants 106 are between 850 and 1000µm in size, the pink contaminants 108 are between 53 and 63µm in size, the gray contaminants 110 are between 125 and 150µm, and the orange contaminants 112 are between 106 and 125µm in size. This calibration mixture is run through the apparatus 10 and the process variables such as vibration frequency, belt speed, illumination intensity, and digital camera sensitivity are adjusted such that typical impurities are identified for removal. The use of this calibration process prior to each use of apparatus 10 ensures removal of the majority of actual colored (off-white) contaminated particles from the powder to be used in fabricating parts. The end result is that scrap rates have been reduced drastically with savings of many thousands of dollars.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A method for detecting and removing foreign particles in polymeric resin powder comprising:
drying the resin powder;
removing static energy from the resin powder;
producing a layer of resin powder 0.2 to 0.8mm in height in a feeding tray which feeds a conveyor;
conveying the layer of resin powder with a transparent conveyor belt at a speed of between 12.2 and 36.64 meters/minute into a foreign particle detection zone;
illuminating the polymeric resin powder in the detection zone from above and below with a light;
continuously imaging the resin powder from above with a high speed digital CCD camera;
continuously analyzing the images with a control device to detect particles having nonwhite colors; and
actuating a suction system with the control device to suction off any detected particles to produce a polymeric resin powder having a reduced number of foreign particles.

2. The method as set forth in claim 1 wherein the belt is made of a transparent urethane material.

3. The method as set forth in claims 1 and 2 wherein the drying uses air heated to between 40 and 75°C.

4. The method as set forth in claims 1 to 3 further comprising sieving the polymeric resin powder to an average particle size of between 120 and 140 µm prior to drying.

5. The method as set forth in claims 1 to 4 wherein the static energy is removed by an ionizer.

6. The method as set forth in claim 1 further comprising packaging the polymeric resin powder having the reduced number of foreign particles in an anti-static bag.

7. The method as set forth in claim 1 wherein the polymeric resin powder is ultrahigh molecular weight polyethylene resin.

8. The method as set forth in claim 1 further comprising angling the feeding tray downwardly with respect to the conveyor belt at an angle of between 10 and 30 degrees.

9. The method as set forth in claim 8 further comprising vibrating the feeder tray at a vibration frequency between 20 and 30 Hertz.

10. The method as set forth in claim 1 wherein the suction system produced a vacuum pressure of between 5 and 15 kPa.

11. The method as set forth in claim 1 further comprising a hopper for feeding the feeding tray wherein the drying and static energy removal take place prior to filling a hopper which fees the feeding tray.

12. The method as set forth in claim 1 further comprising packaging the powder is packaged in anti-static polyethylene bags after the foreign particles have been suctioned off.

13. The method as set forth in claim 1 further comprising a dryer for drying the powder prior to illumination with air heated to between 40 and 75°C.
